# EUROPEAN PATENT APPLICATION

(11) **EP 1 383 251 A1**
(43) Date of publication of application: **21.01.2004**
(21) Application number: 03253863.9
(22) Date of filing: 18.06.2003
(51) Int. Cl.: H04B 7/10, H04L 12/28

(54) **Wireless-LAN Diversity Antenna**

(30) Priority: 17.07.2002 JP 2002208424
(71) Applicant: ALPS ELECTRIC CO., LTD., Ota-ku Tokyo 145 (JP)
(72) Inventor: Dou, Yuanzhu, Tokyo 145 (JP)
(74) Representative: Kensett, John Hinton

(57) **Abstract**

A dipole antenna (2) (linearly-polarized antenna) is housed in a lower casing (1) and a patch antenna (4) (circularly-polarized antenna) is housed in an upper casing (3). The upright position of the upper casing (3), which is supported with the lower casing (1), can be changed. Thus, the effect of polarization diversity can be expected in addition to the effect of spatial diversity, so that the susceptibility to multipath influence is reduced. Also, appropriately adjusting the direction of the patch antenna allows the patch antenna to perform transmission to and/or reception from above and/or below which cannot be performed by the dipole antenna.

## Description

### BACKGROUND OF THE INVENTION

### 1. Field of the Invention

The present invention relates to a diversity antenna that is used as an external antenna for a wireless LAN (Local Area Network) to transmit and/or receive signal waves.

### 2. Description of the Related Art

In recent years, wireless LANs that allow information to be exchanged through transmission and reception of signal waves in a predetermined frequency spectrum (e.g., 2.4 GHz band) have been in widespread use. Wireless LANs require external antennas for transmitting and receiving signal waves, and, for this type of external antenna, diversity antennas are considered to be preferable. That is, in wireless LANs, a multipath influence, caused by the phenomenon that a signal wave is reflected by a floor and/or a wall and waves that have traveled through a number of channels are combined, is considerable, and thus the reception strength is likely to fluctuate due to the interference of the combined wave resulting from the multipaths. Thus, the adoption of a diversity-system external antenna that uses a plurality of antennas together can reduce the fluctuation of the reception strength.

As such a diversity antenna for a wireless LAN, conventionally, a known configuration is that two linearly-polarized antennas, constituted by dipole antennas or monopole antennas, are set up in parallel to each other with a predetermined space therebetween and both the antennas are connected to a diversity receiving circuit, receiver, transmitter, and the like. Thus, signal waves that are received by the two linearly-polarized antennas are sent to the diversity receiving circuit, in which a signal wave having high reception strength is selected or the signal waves from both the antennas are combined, and then the resulting wave is sent to the receiver and is received.

The above-described conventional diversity antenna for a wireless LAN employs a spatial diversity system in which the mounting positions of two linearly-polarized antennas are displaced from each other. Thus, there is a problem in that an adverse effect of multipaths cannot be eliminated at points where distances from the two antennas are the same. Further, there is a problem in that transmission and/or reception cannot be performed to and/or from above and/or below, since radio waves cannot be radiated in the axial direction of each antenna.

### SUMMARY OF THE INVENTION

Accordingly, the present invention has been made in view of the situations of such background art, and an object of the present invention is to provide a wireless-LAN diversity antenna that can perform transmission to and/or reception from any direction and that is less susceptible to multipath influence.

To achieve the above object, a diversity antenna according to the present invention has a circularly-polarized antenna and a linearly-polarized antenna, and both the antennas are connected to a diversity receiving circuit and one of the antennas is rotatably supported.

The diversity antenna having such a configuration achieves not only spatial diversity but also polarization diversity by using the circularly-polarized antenna and the linearly-polarized antenna which are arranged at different positions. Thus, the diversity antenna has an enhanced diversity effect and thus can substantially reduce multipath influence. Also, appropriately adjusting the direction of the rotatably-supported antenna can cover (complement) the direction in which the other antenna cannot perform transmission and/or reception. Thus, the use of both the antennas allows transmission to and/or reception from any direction.

In the diversity antenna having such a configuration, the circularly-polarized antenna may be an antenna (e.g. a patch antenna) that intensively radiates circularly-polarized radio waves to a specific direction and the linearly-polarized antenna may be an omni-directional antenna (e.g., a dipole antenna or a monopole antenna) with respect to a predetermined plane, and the rotatably-supported antenna may be the linearly-polarized antenna. In such a case, the use of the circularly-polarized antenna to perform transmission and/or reception in the direction extending along the axis of the linearly-polarized antenna allows transmission to and/or reception from any direction. When received radio waves are weak, performing reception with the high-gain circularly-polarized antenna allows the reception sensitivity to be enhanced.

According to the present invention, since the circularly-polarized antenna and the linearly-polarized antenna are used together, the diversity effect is high, thereby allowing a substantial decrease in multipath influence. It is also possible to appropriately adjust the direction of the rotatably-supported antenna so as to cover the direction in which the other antenna cannot perform transmission and/or reception. This allows transmission and/or reception to be performed to and/or from any direction. The present invention, therefore, can achieve a highly-reliable diversity antenna with improved usability for a wireless LAN.

An embodiment of the present invention, will now be described, by way of example, with reference to the accompanying diagrammatic drawings, in which:
FIG. 1 is a schematic side view of a diversity antenna according to an embodiment of the present invention; and
FIG. 2 is a schematic front view of the diversity antenna.

### DESCRIPTION OF THE PREFERRED EMBODIMENT

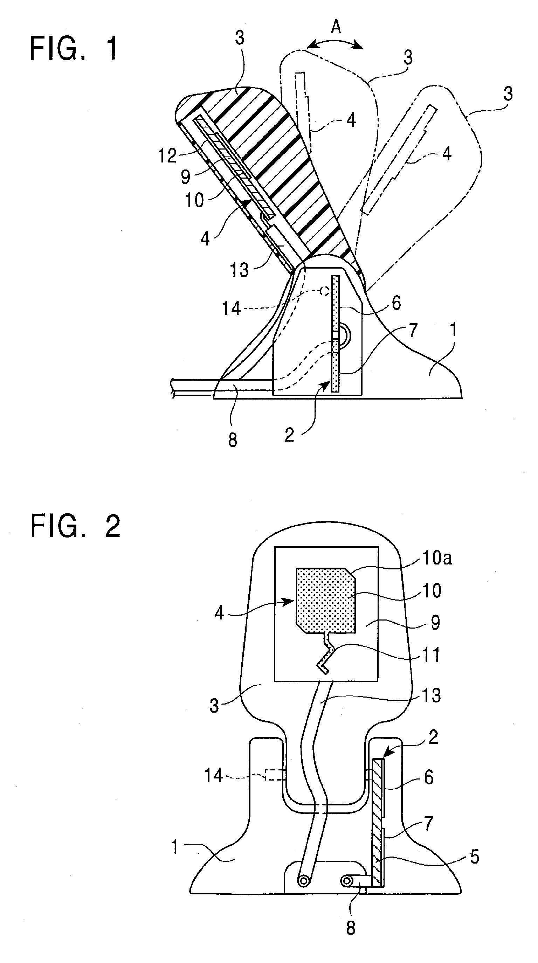

An embodiment of the present invention will now be described with reference to the accompanying drawings. FIG. 1 is a schematic side view of a diversity antenna according to an embodiment of the present invention and FIG. 2 is a Schematic front view of the diversity antenna

The diversity antenna shown therein is used as an external antenna for a wireless LAN, and has a dipole antenna 2, which is housed in a lower casing 1, and a patch antenna 4, which is housed in an upper casing 3. The upper casing 3 is supported with the lower casing 1 so as to be rotatable along the arrow A in FIG. 1. The dipole antenna 2 and the patch antenna 4 are connected to a diversity receiving circuit, receiver, transmitter, and so on, which are not shown. Thus, signal waves received by the dipole antenna 2 and the patch antenna 4 are sent to the diversity receiving circuit, in which a signal wave having high reception strength is selected or the signal waves from both the antennas 2 and 4 are combined, and the resulting wave is sent to the receiver and is received.

The dipole antenna 2 is a linearly-polarized (vertically-polarized) antenna referred to as a "center feed dipole antenna". That is, the dipole antenna 2 has, on one surface of a dielectric substrate 5, a pair of strip conductors 6 and 7 that respectively extend upward and downward, and radio signals are fed to an end of the adjoining side of the strip conductors 6 and 7 through a feed line 8. The entire length of the strip conductors 6 and 7, which serve as radiating elements, i.e., the length between the upper end of the strip conductor 6 and the lower end of the strip conductor 7, is set to one half the wavelength of a radio wave used, considering the wavelength shortening effect by the dielectric substrate 5. The dipole antenna 2 is an omni-directional antenna with respect to the horizontal plane and radiates radio waves in all directions except the vertical direction. The lower casing I, which houses the dipole antenna 2, is a molded unit made of a synthetic resin, which is a dielectric material, and is designed to have a shape with a wide bottom that provides high stability.

The patch antenna 4 is a circularly-polarized antenna. That is, the patch antenna 4 has, on one surface of a dielectric substrate 9, a substantially-square patch electrode 10 and a microstrip line 11 for feeding. Further, a grounding conductor 12 is provided on substantially the entire surface of the other surface of the dielectric substrate 9, and radio signals are fed to the patch electrode 10 through a feed line 13 and the microstrip line 11. The patch electrode 10 serving as a radiating element has a recess 10a, which is a recessed separating element. During feed, circularly-polarized radio waves (right-hand circularly-polarized radio waves in this embodiment) are radiated toward the front of the patch electrode 10. The upper casing 3, which houses the patch antenna 4, is also a molded unit made of a synthetic resin, which is a dielectric material, and is designed to have a shape that a portion facing the patch electrode 10 is particularly thick. With this arrangement, the phase of radio waves radiated from the center portion of the patch electrode 10 is delayed relative to the phase of radio waves radiated from the peripheral portion thereof. As a result, the radiation pattern by the patch antenna 4 is focused, so that the gain is increased. Rotating the upper casing 3 about a shaft 14 allows the inclination of the upright position of the upper casing 3 to change above the lower casing 1. This makes it possible to change the direction of radio waves radiated from the patch antenna 4, depending on the upright position of the upper casing 3. An offset feeding method in which the microstrip line 11 is eliminated and a feed point is provided at a predetermined position in the patch electrode 10 may also be used as a feeding method for the patch antenna 4.

In the diversity antenna described above, the dipole antenna 2, which is a linearly-polarized antenna, is housed in the lower casing 1, and the patch antenna 4, which is a circularly-polarized antenna, is housed in the upper casing 3. Thus, an advantage of polarization diversity can also be expected in addition to an advantage of spatial diversity. Because of such an improvement in diversity effect, this antenna is highly reliable and is less susceptible to multipath influence. In addition, since the upright position of the upper casing 3 can be changed along the arrow A, appropriately adjusting the direction of the patch antenna 4 allows the patch antenna 4 to perform transmission to and/or reception from above and/or below which cannot be performed by the dipole antenna 2.

For example, when performing transmission to and/or reception from above the dipole antenna 2, it would be sufficient to incline the upper casing 3, as indicated by the solid lines in FIG. 1, such that the patch electrode 10 is directed obliquely upward. Conversely, when performing transmission to and/or reception from below the dipole antenna 2, it would be sufficient to incline the upper casing 3, as indicated by the long-dashed short-dashed line in FIG. 1, such that the patch electrode 10 is directed obliquely downward. In this manner, since adjusting the direction of the patch antenna 4 allows transmission to and/or reception from above and/or below the dipole antenna 2, transmission to and/or reception from any direction can be performed wherever the diversity antenna is placed, thereby enhancing usability.

During transmission to and/or reception from a given substantially horizontal direction, the diversity antenna can utilize the omni-directional dipole antenna 2. In this case, however, when radio waves that can be received by the dipole antenna 2 are weak, orienting the high-gain patch antenna 4 in that direction (see the long-dashed double-short-dashed line in FIG. 1) allows the reception sensitivity to be enhanced. Thus, this diversity antenna is an antenna that can also deal with weak radio waves.

Even when the linearly-polarized antenna is a monopole antenna, the same advantages of this embodiment can be expected. In addition, the shape of the patch electrode of the patch antenna is not limited to a square and thus may be another shape such as a circle. Further, a high-gain antenna other than a patch antenna may also be used as the circularly-polarized antenna.

## Claims

1. A diversity antenna for a wireless local area network, comprising:
a circularly-polarized antenna; and
a linearly-polarized antenna,
wherein both the antennas are connected to a diversity receiving circuit and one of the antennas is rotatably supported.

2. A diversity antenna according to claim 1, wherein the circularly-polarized antenna is an antenna that intensively radiates circularly-polarized radio waves to a specific direction and the linearly-polarized antenna is an omni-directional antenna with respect to a predetermined plane, and the rotatably-supported antenna is the linearly-polarized antenna.

3. A diversity antenna according to claim 1 or 2, wherein the circularly-polarized antenna is a patch antenna and the linearly-polarized antenna is a dipole antenna or a monopole antenna.
